# EUROPEAN PATENT APPLICATION

(11) **EP 2 581 809 A1**
(43) Date of publication of application: **17.04.2013**
(21) Application number: 12188292.2
(22) Date of filing: 12.10.2012
(51) Int. Cl.: G06F 3/01, G06F 3/02, H01H 13/702

(54) **Touch keypad module**

(30) Priority: 13.10.2011 TW 100137153
(71) Applicant: eTurboTouch Technology Inc., JhongLi City 320 (TW)
(72) Inventor: Wang, Kuei-Ching, Longtan Township (TW); Lin, Ta-Hu, Taipei City (TW); Lin, Shou-Chieh, Taoyuan City (TW)
(74) Representative: Meyer-Dulheuer, Karl-Hermann

(57) **Abstract**

A touch keypad module includes a touch input panel and at least one prompt unit. The touch input panel has a plurality of input units. When at least one of the input units generates an input signal, the prompt unit generates a prompt message.

## Description

### BACKGROUND OF THE INVENTION

### Field of Invention

The present invention relates to an input device and, in particular, to a touch input device.

### Related Art

Various kinds of touch input devices have been applied to electronic products in the recent years. For example, mobile phones and tablet computers are mostly configured with a touch screen as their input device. Regarding to a touch screen, the user can simply touch the screen directly to input instructions, control the cursor, or input words by writing. Besides, the touch screen can also show the virtual buttons, so that the user can click the virtual buttons to input the corresponding words.

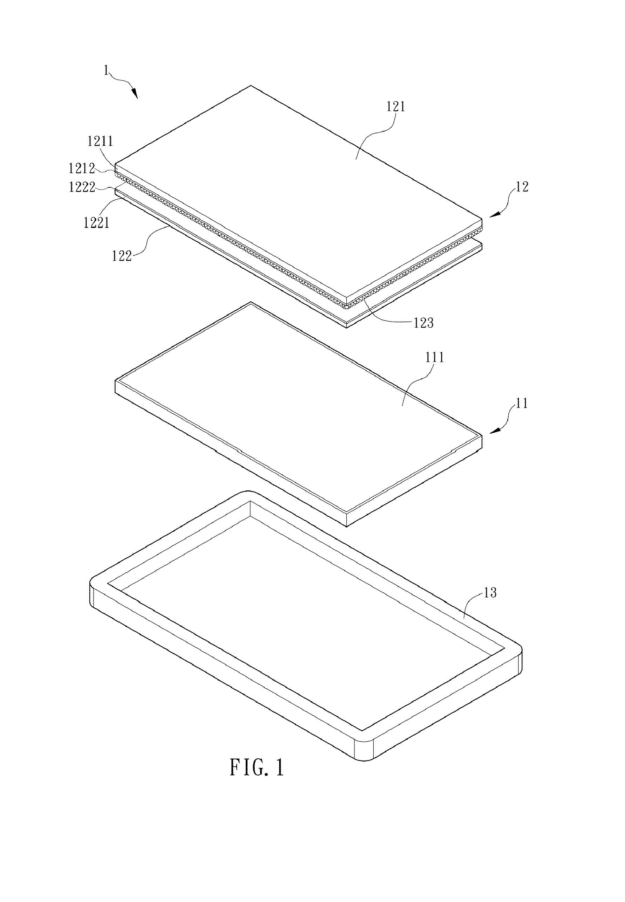

As shown in FIG. 1, a touch screen 1 includes a display device 11, a touch input panel 12, and a housing 13. The display device 11 and the touch input panel 12 are disposed in the housing 13, while the touch input panel 12 is located on a display surface 111 of the display device 11. The touch input panel 12 can be a resistive touch panel, a capacitive touch panel, a supersonic touch panel, or an IR touch panel, wherein the resistive touch input panel is most popular. The resistive touch input panel is mainly divided into 4-wire, 5-wire, 6-wire, and 8-wire types touch input panel. The 4-wire touch input panel has lower manufacturing cost and is fully developed, so that it has been widely applied to various products.

The touch input panel 12 mainly includes a conductive glass substrate 121 and a conductive film 122. The conductive glass substrate 121 includes a glass substrate 1211 and a conductive layer 1212 disposed on the glass substrate 1211. The conductive film 122 mainly includes a thin film 1221 and another conductive layer 1222 disposed on the thin film 1221. The conductive layers 1212 and 1222 are disposed opposite to each other, and they can be made of ITO (indium tin oxide). The conductive glass substrate 121 and the conductive film 122 are separated from each other by a spacer 123. This configuration can prevent the undesired contact of the conductive layers 1212 and 1222 as the user does not operate the touch input panel 12, thereby decreasing the misjudgment of touch input.

The conventional touch input panel 12 is usually cooperated with the display device 11. For example, the display device 11 can display an object, so that the user can aim at and click the corresponding area of the touch input panel 12. Otherwise, the display device 11 may display the cursor, so that the user can control to move the cursor. If the touch screen 1 functions as a keyboard, it is necessary to show the entire or most keys on the display device 11, so that the user can touch the specific area of the touch input panel 12 corresponding the shown key so as to key in the desired letter. This method is to show a virtual keyboard on the touch screen 1 instead of forming physical buttons on the touch input panel 12.

The conventional touch input panel 12 must cooperate with the display device 11 to provide the recognizable buttons for the user to clearly and correctly press the corresponding area(s), thereby generating the correct key signal. In other words, the conventional touch input panel 12 can not be used as a complete input device by itself.

In addition, the conventional touch input panel 12 can provide the input function, but it is not equipped with the prompt function for assisting the user to operate the touch input panel 12. For example, if the user is in a dark environment, he/she may press the wrong buttons. In addition, since the touch input panel 12 has a planar surface and is not configured with any mark points, so that some users, such as blinds, can not actually touch or press the desired virtual buttons.

Therefore, it is an important subject of the present invention to provide a touch input module that can be operated independently and has the function of prompting the operation messages.

### SUMMARY OF THE INVENTION

In view of the foregoing subject, an objective of the present invention is to provide a touch keypad module that can be operated independently and has the function of prompting the operation messages.

To achieve the above objective, the present invention discloses a touch keypad module including a touch input panel and at least one prompt unit. The touch input panel has a plurality of input units. When at least one of the input units generates an input signal, the prompt unit generates a prompt message.

In one embodiment, at least one of the input units functions as a position input unit. When the position input unit generates the input signal, the prompt unit generates the prompt message.

In one embodiment, when one of the input units other than the position input unit generates the input signal, the prompt unit does not generate the prompt message or generates an additional prompt message.

In one embodiment, the prompt message is a sound message, and the prompt unit comprises a sound element.

In one embodiment, the prompt message is a light message, and the prompt unit comprises a passive lighting element such as a light-emitting diode.

In one embodiment, at least two of the input units function as position input units, and the prompt unit generates different prompt messages corresponding to the position input units, respectively.

In one embodiment, the touch input panel further includes a plurality of column wires and a plurality of row wires, which cross with each other. Each of the input units covers at least one cross point of the column wires and the row wires.

In one embodiment, the touch input panel is a resistive touch panel or a capacitive touch panel.

In one embodiment, the touch keypad module further includes a connecting element, which is connected to the touch input panel and is detachably connected to a surface (e.g. a non-horizontal surface).

In one embodiment, the input units are apart from each other with an interval. For example, the cross points of part of the column wires and the row wires are not located within any input unit but located within the interval.

In one embodiment, the touch keypad module further includes a housing and a connecting element. The touch input panel is disposed in the housing, and the connecting element is disposed on the housing for detachably connecting the housing to a surface.

In one embodiment, the touch keypad module further includes a control unit electrically connected with the input units for generating a key signal according to the input signal. In addition, the touch keypad module further includes a wireless communication unit electrically connected with the control unit for transmitting the key signal.

In one embodiment, the touch keypad module further includes an antenna disposed on the touch input panel or the control unit.

In one embodiment, the touch input panel is a flexible touch input panel.

As mentioned above, the touch keypad module of the present invention includes a touch input panel configured with a plurality of input units, which independently define the button areas. In other words, each input unit represents a corresponding button, so that the touch keypad module does not have to cooperate with the display device and can independently function as an input device. Besides, the touch keypad module of the present invention includes a prompt unit, which can generate the prompt message for properly prompting the input status. For example, when the user correctly presses the input unit to input a signal, the prompt unit can output a proper message such as a sound message, a light message, a vibration message, or a smell message. Accordingly, the user can easily confirm to input through the touch keypad module. In addition, at least one of the input units can be used in positioning. More specific, when the input unit located at a specific position generates the input signal, the prompt unit outputs the proper message for a certain users, so that the user can easily make sure that whether he/she touches the correct or desired position or not. Moreover, the user can precisely recognize the operating range or the range of the input unit according to the prompt message. As a result, the user can easily operate the touch input panel to input instructions or words.

### BRIEF DESCRIPTION OF THE DRAWINGS

The invention will become more fully understood from the detailed description and accompanying drawings, which are given for illustration only, and thus are not limitative of the present invention, and wherein:

FIG. 1 is a schematic diagram of a conventional touch screen;

FIGS. 2A to 3B are schematic diagrams showing touch keypad modules according to a preferred embodiment of the present invention;

FIG. 4 is a top view showing a part of the touch input panel of the touch keypad module according to the preferred embodiment of the present invention;

FIGS. 5A to 5D are schematic diagrams of the touch input panel of the touch keypad module according to the preferred embodiment of the present invention;

FIGS. 6A and 6B are block diagrams of the touch keypad module according to the preferred embodiment of the present invention; and

FIG. 7 is a schematic diagram of a touch keypad module according to the preferred embodiment of the present invention.

### DETAILED DESCRIPTION OF THE INVENTION

The present invention will be apparent from the following detailed description, which proceeds with reference to the accompanying drawings, wherein the same references relate to the same elements.

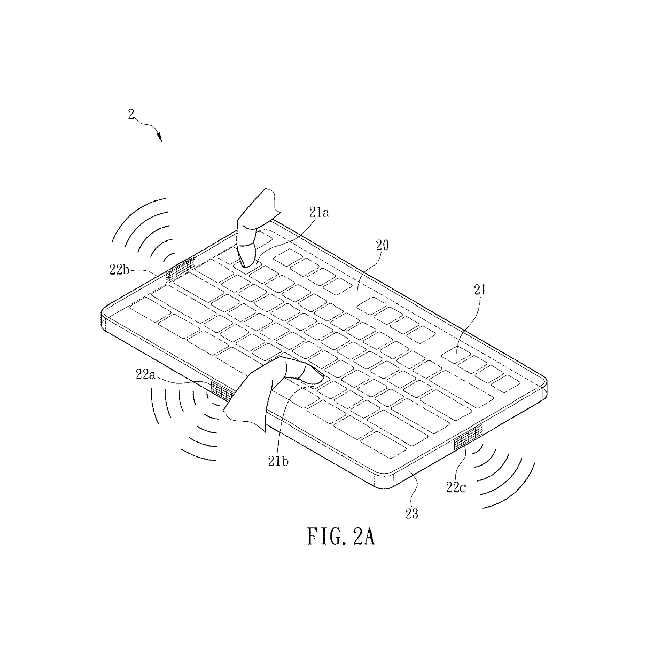

FIG. 2A is a schematic diagram showing a touch keypad module 2 according to a preferred embodiment of the present invention. The touch keypad module 2 includes a touch input panel 20, which includes a plurality of input units 21. Each input unit 21 can function as a button area corresponding to a button. Besides, each input unit 21 can generate an input signal while the user touches or presses it.

The touch keypad module 2 does not need a display apparatus to show the button areas, but directly forms a plurality of input units 21 with individual input functions on the touch input panel 20. Each input unit 21 can present the corresponding button. For example, the areas of the input units 21 can be configured with patterns (e.g. letters or symbols) corresponding to the buttons, so that the user can simply recognize them. Besides, the patterns can be configured by printing or laser ablation. Otherwise, it is also possible to provide a color fluorescent material or dye in the input units 21 to show the corresponding letters or symbols.

For example, the touch keypad module 2 may include buttons arranged as a standard keyboard. In more detailed, the touch input panel 20 includes a plurality of input units 21, and the input units 21 represent the buttons of a standard keyboard such as A-Z, F11 to F12, "All", "Ctrl", Space, Enter, Backspace, Home, End, Page Up, and Page Down. The input units 21 are configured on the touch input panel 20 at the positions corresponding to the buttons of a standard keyboard.

In addition, the touch keypad module 2 may further include prompt units 22a to 22c. When at least one of the input units 21 generates an input signal, the prompt unit 22a, 22b or 22c generates the prompt message. The prompt message can acknowledge the user about the input status by any sensible message such as sound message, light message, vibration message or smell message.

The touch input panel 20 and the prompt units 22a-22c are disposed on a housing 23 of the touch keypad module 2. In this embodiment, one of the input units 21 functions as a position input unit 21a. When the position input unit 21a generates an input signal, the prompt unit 22a-22c generates the prompt message.

In addition, when another input unit 21 other than the position input unit 21a generates the input signal, the prompt unit 22a-22c does not generate the prompt message or generates an additional prompt message. In other words, when another input unit 21 instead of the position input unit 21a generates the input signal, the prompt unit 22a-22c does not generate the prompt message. Alternatively, if the position input unit 21a and another input unit 21 generate the input signals respectively, the prompt unit 22a-22c may generate different prompt messages. Thus, the user may be clearly acknowledged that whether to touch the touch input panel 20 or to press on the correct position.

In this embodiment, two of the input units 21 function as position input units 21a and 21b, and the prompt units 22a, 22b and 22c generate the sound message corresponding to the input units 21a-21b. For example, the position input unit 21a is corresponding to "1" of the standard keyboard, while the position input unit 21b is corresponding to "M" of the standard keyboard. In this case, the user can listen to the sound message to recognize the position of the corresponding buttons (e.g. the position input units 21a and 21b) on the touch keypad module 2, and thus figure out the relative positions of other buttons (input units 21). In addition, the position input units 21a and 21b may be corresponded to other buttons such as "F" and "J".

Each of the prompt units 22a, 22b and 22c may include a sound element such as an amplifier (e.g. speaker or buzzer). The prompt units 22a, 22b and 22c may provide the same sound, so that the user can easily recognize it. Besides, the prompt units 22a, 22b and 22c may provide different sounds with respective to the position input units 21a and 21b of different positions. For example, the prompt units 22a, 22b and 22c may provide the sounds with different frequencies or waveforms. Moreover, the prompt units 22a, 22b and 22c may further provide sounds with respective to other input units 21 other than the position units, and the sounds with respective to other input units 21 are different from that with respective to the position input units 21a and 21b. For example, the sounds with respective to the position input units 21a and 21b are usually more unique and special, so that the user can easily distinguish the normal input units and the position input units.

The prompt units 22a, 22b and 22c can be disposed on different side surfaces of the housing 23, respectively. Alternatively, they can be all disposed on the top surface of the housing 23.

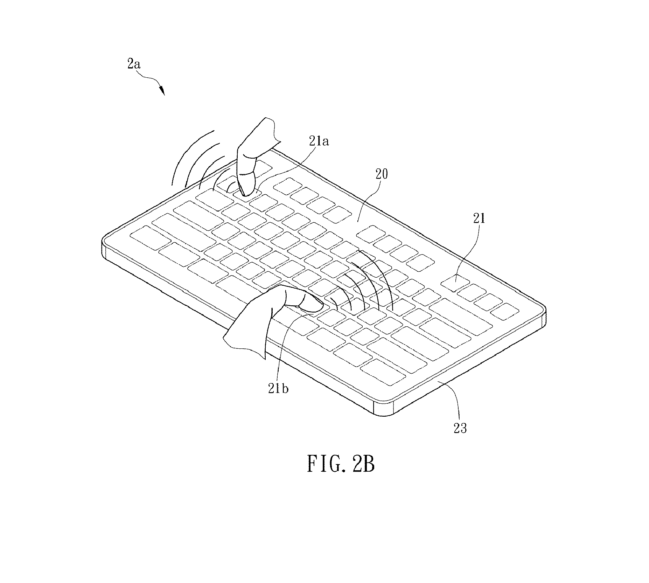

FIG. 2B is a schematic diagram showing another touch keypad module 2a according to the preferred embodiment of the present invention. Referring to FIG. 2B, the prompt units are integrated in the input units 21 (e.g. the position input units 21a and 21b), and they provide the same sound, so that the user can easily recognize them. In addition, the prompt units located at different positions can provide different sounds, such as the sounds with different frequencies or waveforms. Moreover, the input units other than the position input units may also be configured with the prompt units, and the prompt units configured in the input units 21 and the position input units 21a and 21b may provide different sounds. In this case, the sound provided by the prompt unit of the position input units 21a and 21b is usually more unique and special, so that the user can easily distinguish the normal input units and the position input units.

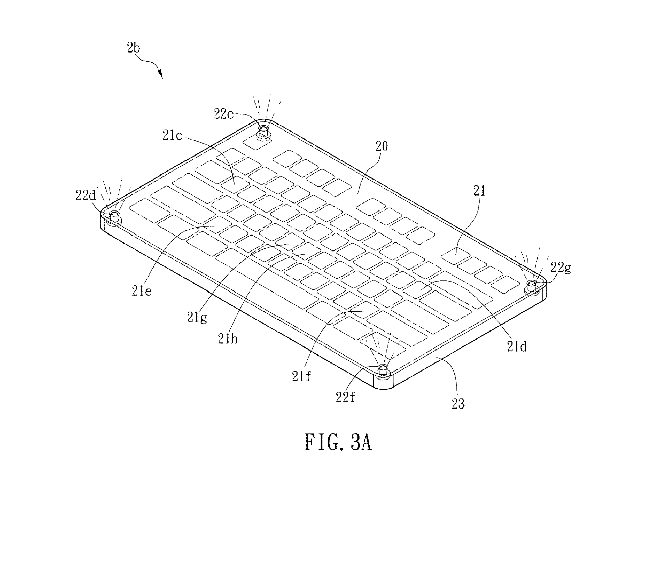

FIG. 3A is a schematic diagram showing another touch keypad module 2b according to the preferred embodiment of the present invention. Referring to FIG. 3A, multiple input units 21 function as position input units 21a to 21h, and the prompt units 22d to 22g can generate light messages with respective to the position input units 21c to 21h. The position input units 21c to 21h are corresponding to "Q", "]", "Z", "/", "G" and "H" of a standard keyboard. The user can recognize the position of the corresponding buttons (e.g. the position input units 21c to 21h) on the touch keypad module 2b by vision, and thus figure out the relative positions of other buttons (input units 21).

Each of the prompt units 22d to 22g includes a lighting element such as a passive lighting element. In this embodiment, the passive lighting element is a light-emitting diode.

The prompt units 22d to 22g may provide the same light beams, so that the user can easily recognize them. In addition, the prompt units 22d to 22g located at different positions can provide different light beams, such as the light beams with different colors or intensities. Moreover, the input units 22d to 22g may provide different light beams with respective to different position input units 21a to 21h. Besides, the input units 22d to 22g may also provide light beams with respective to other input units 21 other than the position input units, and the light beams with respective to the input units 21 and the position input units 21a and 21b may be different. In this case, the light beams provided with respective to the position input units 21a and 21b are more unique and special, so that the user can easily distinguish the normal input units and the position input units.

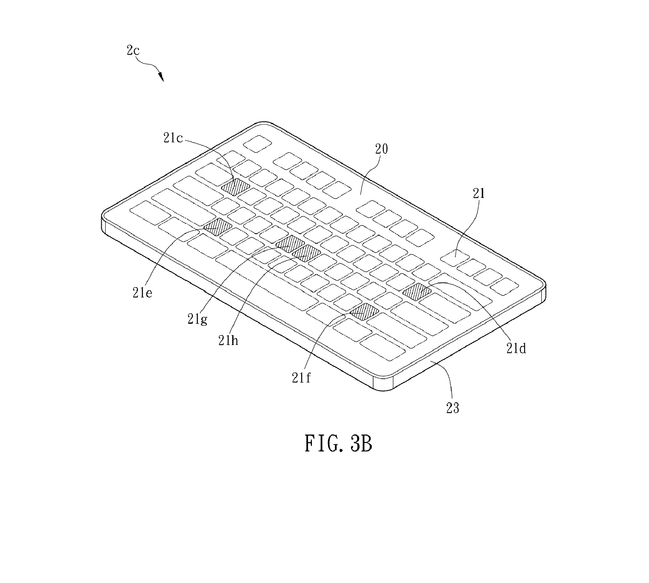

FIG. 3B is a schematic diagram showing another touch keypad module 2c according to the preferred embodiment of the present invention. Referring to FIG. 3B, multiple input units 21 function as position input units 21a to 21h, and the prompt units (not shown) are configured within the position input units 21c to 21h for generating light messages. The position input units 21c to 21h are corresponding to "Q", "]", "Z", "/", "G" and "H" of a standard keyboard. The user can recognize the position of the corresponding buttons (e.g. the position input units 21c to 21h) on the touch keypad module 2c by vision, and thus figure out the relative positions of other buttons (input units 21).

The prompt unit of each of the position input units 21c to 21h is a lighting element such as a passive lighting element. In this embodiment, the passive lighting element is a light-emitting diode.

The position input units 21a and 21b may provide the same light beams, so that the user can easily recognize them. In addition, the position input units 21a and 21b located at different positions can provide different light beams, such as the light beams with different colors or intensities. Besides, the input units 21 other than the position input units may also provide light beams, which are usually different from the light beams of the position input units 21a and 21b. In this case, the light beams provided by the position input units 21a and 21b are more unique and special, so that the user can easily distinguish the normal input units and the position input units.

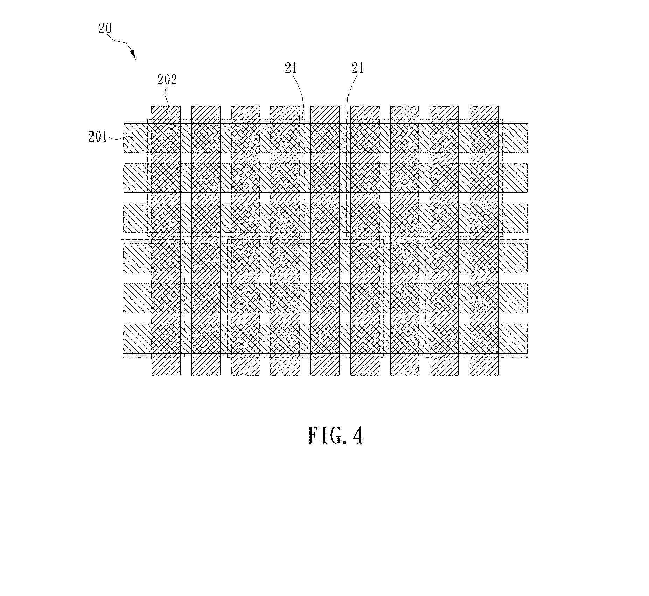

FIG. 4 is a top view showing a part of the touch input panel of the touch keypad module according to the preferred embodiment of the present invention.

With reference to FIG. 4, the touch input panel 20 further includes a plurality of row wires 201 and a plurality of column wires 202, which cross with each other. Each of the input units 21 covers at least one cross point of the row wires 201 and the column wires 202.

For example, each input unit 21 covers 12 cross points, and three cross points located between two adjacent input units 21 along the row direction are not covered by the input units 21. In other words, the input units 21 are apart from each other with an interval. Accordingly, some cross points of the row wires 201 and the column wires 202 are not covered by any input unit 21 but covered by the intervals.

The touch input panel 20 can be a digital matrix resistive touch panel. When a user presses the touch input panel 20, the cross point of the row wire 201 and the column wire 202 under the pressed area is conductive so as to generate the input signal. The input signal is then transmitted to the control unit through the row wire 201 and the column wire 202 of the conducted cross point. Moreover, the touch input panel 20 may utilize the gravity feature to prevent the undesired touch operation.

The row wires 201 and the column wires 202 can be made of transparent conductive materials such as indium tin oxide (ITO). Otherwise, they can also be made of opaque materials such as a metal. For example, all of the input units 21 are configured with a color pattern, which can selectively be made of fluorescent materials or dyes. In this case, the user may not see the internal circuits of the touch keypad module 2 directly. Besides, even though the row wires 201 and the column wires 202 are made of opaque materials, the user can not see them directly, so that the touch keypad module 2 can have a more beautiful appearance.

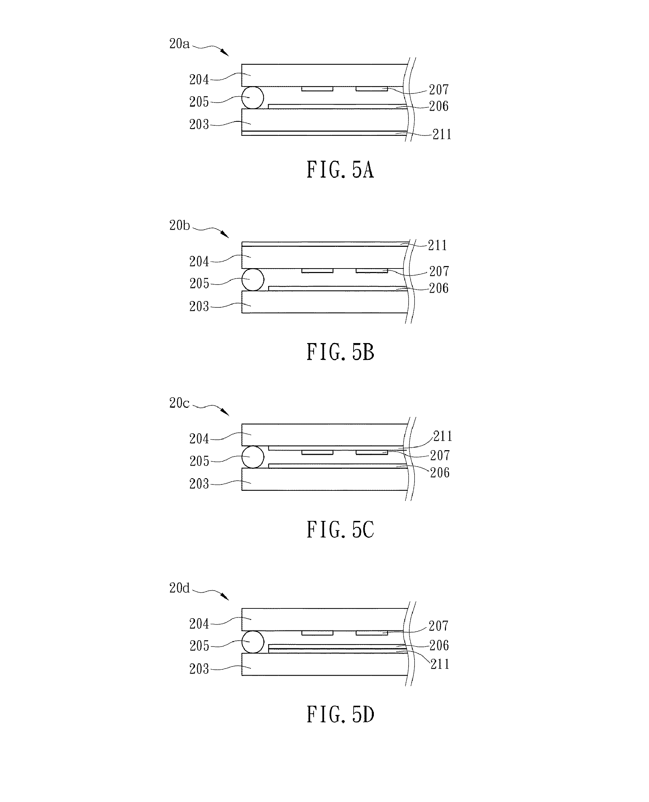

FIGS. 5A to 5D are schematic diagrams of the touch input panel of the touch keypad module according to the preferred embodiment of the present invention. Referring to FIGS. 5A to 5D, each of the touch input panels 20a to 20d is a resistive touch panel or a capacitive touch panel, and it mainly includes a first plate 203 and a second plate 204. A spacer 205 is configured between the first plate 203 and the second plate 204 for separating them. A conductive layer 206 is disposed on the inner side of the first plate 203, while another conductive layer 207 is disposed on the inner side of the second plate 204. The conductive layers 206 and 207 can be patterned to define a plurality of row wires and column wires. For example, the first plate 203 is a glass substrate, and the second plate 204 is a film, so that the user can touch or press the second plate 204 to perform the input function. Alternatively, the first plate 203 and the second plate 204 may be all made of films.

The pattern 211 of the input unit 21 can be formed on the first plate 203 or the second plate 204 by printing. Besides, the material of the pattern can be a fluorescent material or a dye, which may be arranged in a corresponding letter or symbol.

The pattern 211 can be formed on the outer surface of the first plate 203 or the second plate 204. As shown in FIG. 5A, the pattern 211 is disposed on the outer surface of the first plate 203; otherwise, as shown in FIG. 5B, the pattern 211 is disposed on the outer surface of the second plate 204.

Alternatively, the pattern 211 can be formed on the inner surface of the first plate 203 or the second plate 204, and the conductive layer is then formed on the pattern 211. As shown in FIG. 5C, the pattern 211 is disposed on the inner surface of the second plate 204, and then the conductive layer 207 is formed on the pattern 211. Otherwise, as shown in FIG. 5D, the pattern 211 is disposed on the inner surface of the first plate 203, and then the conductive layer 206 is formed on the pattern 211.

In addition, a light-emitting diode (LED) can be disposed at the side surface of the first plate 203 as shown in FIGS. 5A to 5D, and a light-guiding plate is disposed at the outer surface of the first plate 203 as shown in FIGS. 5A to 5D. The light emitted from the LED enters the first plate 203 through its side surface, and then the light-guiding plate guides the light toward the inner side of the first plate 203. After that, the light can pass through the pattern 211 and reach the outer surface of the second plate 204. Accordingly, the user can view the content of the pattern 211.

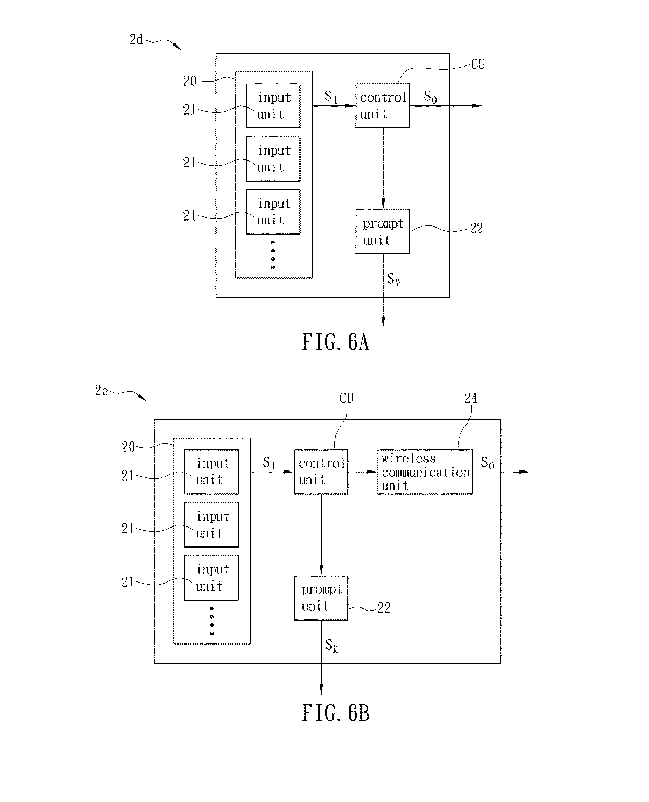

Referring to FIG. 6A, a touch keypad module 2d further includes a control unit CU, which is electrically connected with the input units 21 and the prompt units 22. The control unit CU receives the input signal S_{I} generated by the touch input panel 20, and then determines whether the input signal S_{I} is valid or not. For example, the input signal S_{I} carries the information that whether the cross point of the row and column wires in the touch input panel 20 is conducted or not. The control unit CU can determine the corresponding input unit 21 according to the position of the cross point indicated by the input signal S_{I}, thereby selecting the button represented by the input unit 21 and outputting the corresponding key signal So. At the same time, the control unit CU can control the prompt unit 22 to generate the prompt message S_{M}.

If the input signal is generated by another cross point, which is not covered by the input unit 21, the control unit CU can not select the corresponding button and thus can not output the key signal. Alternatively, the control unit CU may control the prompt unit 22 to generate another prompt message to acknowledge the user that a wrong area is touched.

The key signal So can be outputted by wires. For example, the touch keypad module 2d can output the key signal So and retrieve power through a wire such as a USB connector. The USB connector can not only transmit the key signal So, but also supply power to the touch keypad module 2d.

Referring to FIG. 6B, a touch keypad module 2e further includes a wireless communication unit 24, which is electrically connected with the control unit CU. The key signal generated by the control unit CU can be outputted through the wireless communication unit 24 (wireless transmission). In this embodiment, the wireless communication unit 24 includes an antenna and an RF circuit (radio frequency circuit). The wireless communication unit 24 is configured for communicating the touch keypad module 2e with other electronic device so as to transmit the input signal generated by the touch control panel 20 to other electronic device. Consequently, the touch keypad module 2e can be functioned as a wireless input device for other electronic device.

In this embodiment (with the wireless communication unit 24), the touch keypad module 2e may further include a power unit for supplying the necessary power source. The power unit includes at least one battery to supply the power for driving the internal circuits of the touch keypad module 2e.

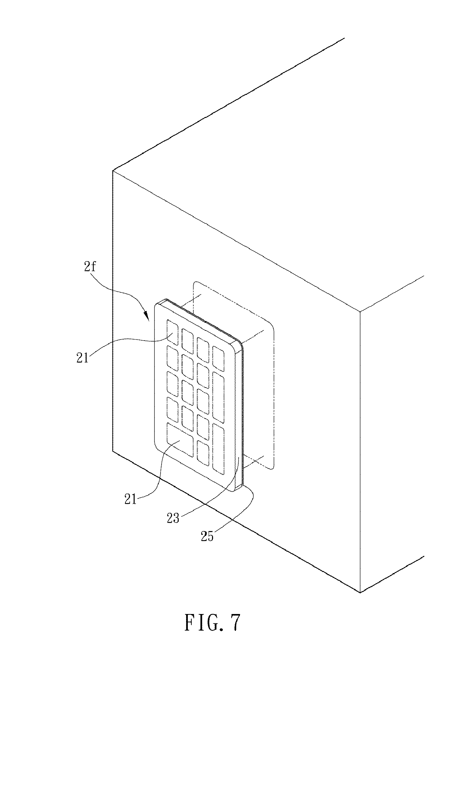

FIG. 7 is a schematic diagram of a touch keypad module 2f according to the preferred embodiment of the present invention. Referring to FIG. 7, the touch keypad module 2f further includes a connecting element 25, which is disposed on the housing 23 for detachably connecting the housing 23 to a surface. The surface can be a non-horizontal surface.

In this embodiment, the connecting element 25 is configured at the back surface of the touch keypad module 2f, and the outer surface of the connecting element 25 has the ability of attaching to other surface. For example, the connecting element 25 can be Velcro, adhesive, or magnet, so that it can attach to other surface by surface tension, adhesion or magnetic. Accordingly, the user can easily position the touch keypad module 2f at any place such as the surface of a wall or a casing of an electronic device (e.g. refrigerator, washing machine, television, air condition, and etc.).

The touch keypad module 2f can be used as a wireless input device or a remote controller. Due to the configuration of the connecting element 25, the touch keypad module 2f can be an input device that is easily moved, fixed and detached. Besides, the touch keypad module 2f is configured with the wireless communication unit for transmitting data wirelessly, so that it is not limited by the length of physical wire.

Moreover, the touch keypad module 2f can also function as a switch, such as a switch disposed on a wall or the surface of decoration.

In this embodiment, the touch keypad module 2f shows as a number keypad. In details, the touch input panel 20 includes a plurality of input units 21, which represent the number keys 0-9, "+", "-", "*", "/"and enter key. The input units 21 are disposed at the positions corresponding to the buttons of a conventional number keypad.

In the above embodiments, the touch input panel 20 can be a flexible panel. Regarding to the application as shown in FIG. 7, the flexible touch input panel 20 can further be applied to various kinds of surfaces, and the touch input panel 20 and the connecting element 25 can be curved to fit the non-planar surface, thereby achieving better connecting effect.

Furthermore, in the above embodiments, the touch keypad modules are configured as, for example but not limited to, a standard keyboard or a number keypad. Of course, the touch keypad module can be configured as any suitable type according to the application.

Moreover, in the above embodiments, since the touch keypad module has the prompt function, so that it can still be operated normally under a dark environment so as to reduce the percentage of pressing the wrong buttons. Regarding to a blind person, he/she can clearly acknowledge that whether the correct or desired button has been pressed or not.

In the above embodiments, the touch keypad module or the input unit may be configured with a vibration prompting function. For example, the touch keypad module includes a vibration element such as a vibration motor. The touch input panel has a touch input surface, which displays the input units. When the touch input surface is pressed or touched, the vibration element generates a vibration. In one mode, when the user touches the touch input surface but does not presses any of the input units, the vibration element generates a vibration to prompt the user that the touch operation is failed. When the user touches any of the input units, the vibration element does not generate vibration. In another mode, when the user touches the touch input surface but does not presses any of the input units, the vibration element does not generate vibration; otherwise, when the user touches any of the input units, the vibration element generates a vibration to simulate the real touch response. In another mode, the vibration element can generate different vibrations with respect to different situations. For example, when the user touches any of the input units, the vibration element generates a smaller vibration to simulate the real touch response; otherwise, when the user touches the touch input surface but does not presses any of the input units, the vibration element generates a larger vibration to prompt the user that the touch operation is failed. Besides, the vibration element can be a micro vibration structure formed in the input unit. The micro vibration structure can be a coil and be formed by screen printing process.

In addition, in the above embodiments, the components, such as the conductive layer (including wires and electrodes), the pattern of the input units, and antenna, can be formed on the plate by screen printing process. The antenna and conductive layer are formed by different screen printing processes and with different materials. Besides, if the antenna and conductive layer are manufactured with the same material, they can be formed by a single screen printing process.

In summary, the touch keypad module of the present invention includes a touch input panel configured with a plurality of input units, which independently define the button areas. In other words, each input unit represents a corresponding button, so that the touch keypad module does not have to cooperate with the display device and can independently function as an input device. Besides, the touch keypad module of the present invention includes a prompt unit, which can generate the prompt message for properly prompting the input status. For example, when the user correctly presses the input unit to input a signal, the prompt unit can output a proper message such as a sound message, a light message, a vibration message, or a smell message. Accordingly, the user can easily confirm to input through the touch keypad module. In addition, at least one of the input units can be used in positioning. More specific, when the input unit located at a specific position generates the input signal, the prompt unit outputs the proper message for a certain users, so that the user can easily make sure that whether he/she touches the correct or desired position or not. Moreover, the user can precisely recognize the operating range or the range of the input unit according to the prompt message. As a result, the user can easily operate the touch input panel to input instructions or words.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A touch keypad module, comprising:
a touch input panel having a plurality of input units; and
at least one prompt unit, wherein when at least one of the input units generates an input signal, the prompt unit generates a prompt message.

2. The touch keypad module of claim 1, wherein at least one of the input units functions as a position input unit, and when the position input unit generates the input signal, the prompt unit generates the prompt message.

3. The touch keypad module of claim 2, wherein when one of the input units other than the position input unit generates the input signal, the prompt unit does not generate the prompt message or generates an additional prompt message.

4. The touch keypad module of claim 1, wherein the prompt message is a sound message, and the prompt unit comprises a sound element.

5. The touch keypad module of claim 1, wherein the prompt message is a light message, and the prompt unit comprises a passive lighting element.

6. The touch keypad module of claim 5, wherein the passive lighting element is a light-emitting diode.

7. The touch keypad module of claim 1, wherein the prompt message is a vibration message or a smell message.

8. The touch keypad module of claim 1, wherein at least two of the input units function as position input units, and the prompt unit generates different prompt messages corresponding to the position input units, respectively.

9. The touch keypad module of claim 1, wherein the input units are apart from each other with an interval.

10. The touch keypad module of claim 1, wherein the touch input panel further comprises:
a plurality of column wires and a plurality of row wires, which cross with each other, wherein each of the input units covers at least one cross point of the column wires and the row wires.

11. The touch keypad module of claim 1, wherein the touch input panel is a resistive touch panel or a capacitive touch panel.

12. The touch keypad module of claim 1, further comprising:
a housing, wherein the touch input panel is disposed in the housing; and
a connecting element disposed on the housing for detachably connecting the housing to a surface.

13. The touch keypad module of claim 1, further comprising:
a control unit electrically connected with the input units for generating a key signal according to the input signal; and
a wireless communication unit electrically connected with the control unit for transmitting the key signal.

14. The touch keypad module of claim 1, wherein the touch input panel is a flexible touch input panel.
